# EUROPÄISCHE PATENTSCHRIFT

(11) **EP 0 551 975 B1**
(45) Veröffentlichungstag und Bekanntmachung des Hinweises auf die Patenterteilung: **16.07.1997**
(21) Anmeldenummer: 93250010.1
(22) Anmeldetag: 11.01.1993
(51) Int. Cl.: A01N 39/00, A01N 33/04

(54) **Desinfektionsmittelkonzentrat und Desinfektionsmittel auf Amin- und Alkoholbasis und deren Verwendung**
Disinfectant concentrate and disinfectant based on amines and alcohols and use thereof
Concentré désinfectant et agent désinfectant basé sur des amines et des alcools et leur usage

(30) Priorität: 17.01.1992 DE 4201038
(43) Veröffentlichungstag der Anmeldung: 21.07.1993
(73) Patentinhaber: SCHÜLKE & MAYR GMBH, D-22840 Norderstedt (DE)
(72) Erfinder: Eggensperger, Heinz, Dr., W-2000 Hamburg 65 (DE); Löwer, Bernd, Dr., W-2000 Hamburg 63 (DE); Mohr, Michael, W-2358 Kaltenkirchen (DE); Goroncy-Bermes, Peter, Dr., W-2070 Ahrensburg (DE); Beilfuss, Wolfgang Dr., W-2000 Hamburg 63 (DE)
(74) Vertreter: UEXKÜLL & STOLBERG

(56) Entgegenhaltungen:
- EP-A- 0 333 143
- EP-A- 0 343 605
- WO-A-91/16032
- DE-A- 3 117 792
- DE-A- 3 943 562
- DE-A- 4 005 784
- DE-C- 4 033 272
- FR-A- 2 602 955
- GB-A- 2 138 798
- US-A- 3 108 036

## Beschreibung

Die Erfindung betrifft ein Desinfektionsmittelkonzentrat auf Amin- und Alkoholbasis, ein daraus herstellbares Desinfektionsmittel sowie deren Verwendung.

Desinfektionsmittel werden in vielen Bereichen eingesetzt, wobei sie der Bekämpfung von Mikroorganismen dienen. Beispielsweise werden sie zur Händedesinfektion, Operationsfeld- oder Wunddesinfektion, Instrumentendesinfektion, Desinfektion von Oberflächen, Wäsche usw. verwendet. Von großem Interesse ist die Wirksamkeit von Desinfektionsmitteln gegen Mykobakterien, insbesondere gegen Tuberkulose-Erreger, die relativ widerstandsfähig sind, so daß häufig keine Abtötung erfolgt, sondern lediglich ihre Vermehrung für einen kurzen Zeitraum gehemmt wird. Darüber hinaus ist neben der bakteriziden Wirksamkeit auch die fungizide und viruzide Wirksamkeit interessant. Erstrebenswert sind möglichst kurze Einwirkzeiten der Desinfektionsmittel bei nichtsdestoweniger gründlicher und nachhaltiger Desinfektionswirkung.

Bisher bekannt sind beispielsweise Desinfektionsmittel, die als Wirkstoffe ein oder mehrere Aldehyde oder Phenole enthalten.

Aus der EP 0 333 143 A2 ist darüberhinaus ein flüssiges Reinigungsmittel bekannt, das als bioziden Wirkstoff ein tertiäres Alkylamin, insbesondere N,N-Bis-(3-aminopropyl)laurylamin und ferner als notwendige Reinigungskomponente anionisches Tensid enthält. Darüber hinaus kann dieses Reinigungsmittel als Lösungsmittel zusätzlich Wasser oder Alkohole mit bis zu 4 Kohlenstoffatomen wie Methanol, Ethanol usw. enthalten. Es kann als Desinfektionsreiniger eingesetzt werden.

Ferner ist aus der EP 0 343 605 A1 ein tuberkulozides Desinfektionsmittel bekannt, das als desinfizierende Komponente N,N-Bis-(3-aminopropyl)laurylamin umfaßt. Neben einem Lösungsmittelgemisch von Wasser und einem Alkohol mit bis zu 4 Kohlenstoffatomen wie Methanol, Ethanol usw. kann es als Reinigungsmittel auch Tenside, quaternäre Ammoniumverbindungen sowie Komplexbildner enthalten.

Aus der EP 0 385 369 A2 ist ein Verfahren zur antimikrobiellen Konservierung von flüssigen Tensiden und tensidhaltigen Lösungen bekannt, bei dem diesen Flüssigkeiten eine N,N-Bis-(3-aminopropyl)laurylamin enthaltende Zubereitung zugesetzt wird.

Bekannt ist aus der DE 40 05 784 A1 ferner ein Desinfektionsmittelkonzentrat, das neben einem Phenoxyalkohol eine kationenaktive Verbindung ausgewählt aus Guanidinium- und quartären Ammoniumverbindungen enthält. Dieses Konzentrat kann Amine oder Aminopolyole wie Tetrakis-(2-hydroxypropyl)-N,N,N',N'-ethylendiamin als Alkalisierungsmittel enthalten.

Nachteilig an den oben genannten bekannten Desinfektionsmitteln und -konzentraten ist, daß a) Aldehyd- und Phenol enthaltende Desinfektionsmittel einen relativ starken und unangenehmen Geruch aufweisen, b) Desinfektionsmittel auf Basis von Amin und kationenaktiven Verbindungen oder von aromatischen Alkoholen und kationenaktiven Verbindungen eben aufgrund des Gehalts an kationenaktiven Verbindungen auf Oberflächen aufziehen und mit anionischen Tenside unverträglich sind, da sie diese desaktivieren. Ein Nachteil, den alle bisher bekannten Präparate aufweisen besteht darin, daß zur kurzfristigen Herbeiführung einer ausreichenden Desinfektionswirkung relativ hohe Wirkstoffkonzentrationen benötigt werden.

Der Erfindung liegt daher die Aufgabe zugrunde, ein Desinfektionsmittel bzw. ein Konzentrat desselben zur Verfügung zu stellen, wobei das Desinfektionsmittel bei im Vergleich zu den bekannten Desinfektionsmitteln gleicher Wirksamkeit erheblich verringerte Wirkstoffkonzentrationen aufweist bzw. bei seiner Anwendung die Einwirkzeit zur Erzielung der beabsichtigten Wirkung erheblich verkürzt werden kann. Das Desinfektionsmittel und das Desinfektionsmittelkonzentrat sollen sich durch Geruchsarmut auszeichnen und über einen längeren Zeitraum stabil und damit lagerfähig sein.

Zur Lösung dieser Aufgabe wird ein Desinfektionsmittelkonzentrat bzw. ein Desinfektionsmittel vorgeschlagen, das Amin und Alkohol umfaßt und dadurch gekennzeichnet ist, daß die Alkoholkomponente 5 bis 50 Gew.% mindestens eines aromatischen Alkohols ausgewählt aus einem Phenoxyalkanol, einem Phenylmonoglykolether eines Oligoglykols mit bis zu 4 Ethylenoxideinheiten oder einem Phenylalkanol umfaßt und die Aminkomponente 10 bis 50 Gew.%, aber nicht 10 Gew.%, mindestens eines sekundären und/oder tertiären, hydroxygruppenfreien Alkylamins der allgemeinen Formel 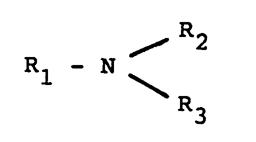 umfaßt, in der R₁ eine C₄-C₂₀-Alkyl, insbesondere C₆-C₁₈-Alkyl, C₅-C₁₀-, insbesondere C₆-Cycloalkyl-, C₇-C₁₀-Aryl-alkyl-, insbesondere C₇-Arylalkyl- oder C₆-C₁₄-Arylgruppe, insbesondere C₆-Arylgruppe ist, R₂ eine Aminoalkylgruppe der Formel -(CH₂)ₙ-NH₂ ist, wobei n eine Zahl von 2 bis 10, bevorzugter eine Zahl von 2 bis 6, insbesondere 2 bis 3 ist, und R₃ Wasserstoff oder R₂ ist,
wobei das Desinfektionsmittelkonzentrat frei von kationenaktiven Verbindungen ausgewählt aus Guanidinium und quartären Ammoniumverbindungen ist.

Bevorzugte Ausführungsformen des erfindungsgemäßen Desinfektionsmittelkonzentrats bzw. des Desinfektionsmittels sind Gegenstand der Unteransprüche.

Bei dem sekundären oder tertiären Alkylamin handelt es sich um ein Amin mit der allgemeinen Formel: 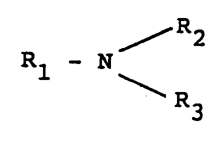 in der R₁ eine C₄-C₂₀-, insbesondere C₆-C₁₈-Alkyl-, C₅-C₁₀-, insbesondere C₆-Cycloalkyl-, C₇-C₁₀, insbesondere C₇-Arylalkyl- oder C₆-C₁₄-, insbesondere C₆-Arylgruppe ist, R₂ eine Aminoalkylgruppe der Formel -(CH₂)ₙ-NH₂ ist, wobei n eine Zahl von 2 bis 10, vorzugsweise 2 bis 6 und besonders bevorzugt 2 bis 3 ist, und R₃ Wasserstoff oder R₂ ist.

Vorzugsweise ist R₁ eine C₆-C₁₈-Alkylgruppe, bevorzugter eine C₁₀-C₁₈- und besonders bevorzugt eine Dodecyl-, Cocosfettalkyl- oder eine Talgfettalkylgruppe. R₂ ist dabei vorzugsweise eine Aminopropylgruppe und R₃ gleich R₂ oder Wasserstoff.

Wenn R₂ und R₃ gleich sind, d.h. ein tertiäres Amin der allgemeinen Formel

R-N[(CH₂)ₙ-NH₂]₂

vorliegt, ist R₁ bevorzugt eine Dodecylgruppe und das ist vorzugsweise Amin N-(3-Aminopropyl)-N-dodecyl-1,3-propandiamin bzw. N,N-Bis-(3-aminopropyl)laurylamin, welches unter der Bezeichnung "Lonzabac 12" von Lonza Ltd., Basel, Schweiz bezogen werden kann.

Ist R₃ Wasserstoff, so ist R₁ vorzugsweise eine Cocosfettalkylgruppe und das Amin das Cocospropylendiamin, das z.B. unter der Bezeichnung Genamin CCP 100D von Hoechst bezogen werden kann.

Das tertiäre Amin Lonzabac 12 ist gegenüber dem sekundären Amin Genamin CCP 100D bevorzugt.

Bei dem aromatischen Alkohol handelt es sich um ein Phenoxyalkanol, einen Phenylmonoglykolether eines Oligoglykols mit bis zu 4 Ethylenoxideinheiten oder ein Phenylalkanol, wobei der Phenylring jeweils substituiert sein kann. Als Substituenten kommen hierbei insbesondere C₁-C₁₈-Alkylgruppen in Frage. Bevorzugt ist es, wenn der aromatische Alkohol 2-Phenoxyethanol, 1-Phenoxy-2-propanol, 2-Phenoxy-1-propanol, 3-Phenoxy-1-propanol, 1-Phenoxy-2 -butanol, 2-Phenoxy-1-butanol, 1-Phenylethylalkohol, 2-Phenylethylakohol, 3-Phenyl-1-propanol, Benzylalkohol, α,4-Dimethylbenzylalkohol oder eine Mischung aus zwei oder mehr dieser Verbindungen ist. Besonders bevorzugt sind Phenoxyethanol, Phenoxypropanol und Phenyloligoglykolether mit bis zu 4 Ethylenoxideinheiten.

Zu den erfindungsgemäßen aromatischen Alkoholen gehören daher auch Gemische aus 1-Phenoxy-2-propanol und 2-Phenoxy-1-propanol, z.B. im Verhältnis von 84:16, das unter dem Handelsnamen "Solvenon PP" erhältlich ist. Ferner kann es sich bei der Alkoholkomponente um ein Gemisch aus 1-Phenoxy-2-butanol und 2-Phenoxy-1-butanol handeln, z.B. in einem Mischungsverhältnis von 94:6. Geeignet sind auch Phenyloligoglykolether mit vorzugsweise 4 Ethylenoxideinheiten (erhältlich unter dem Handelsnamen "Rewopal MPG 40"), die gegenüber beispielsweise Phenoxyethanol oder Phenoxypropanol den Vorteil aufweisen, daß sie mit Wasser mischbar, selbst reinigungswirksam und wirtschaftlich leicht zugänglich sind.

Das Desinfektionsmittelkonzentrat bzw. Desinfektionsmittel kann neben den oben genannten erfindungswesentlichen Bestandteilen außerdem übliche Zusätze wie Lösungsvermittler, Korrosionsschutzmittel, Komplexbildner, Entschäumer, Stabilisatoren, Puffer, Parfüm und/oder Farbstoffe umfassen.

Überraschenderweise ergibt sich bei Anwendung der erfindungsgemäßen Kombination aus aromatischem Alkohol und sekundärem und/oder tert. Alkylamin eine synergistische biozide Wirkung, die eine Erniedrigung des Wirkstoffgehalt bzw. eine Verkürzung der Einwirkzeit ermöglicht.

Das Desinfektionsmittelkonzentrat enthält im allgemeinen 5 bis 50 Gew.-% Amin und 5 bis 50 Gew.-% aromatischen Alkohol. Insbesondere enthält es 10 bis 20 Gew.-% Amin und 20 bis 30 Gew.-% aromatischen Alkohol.

Die gebrauchsfertige Desinfektionsmittellösung enthält im allgemeinen 0,1 bis 10 Gew.-% und vorzugsweise 0,5 bis 5 Gew.-% des Desinfektionmittelkonzentrats und daher im allgemeinen 0,005 bis 5 Gew.% Amin und 0,005 bis 5 Gew.% aromatischen Alkohol. Insbesondere enthält es 0,025 bis 2,5 Gew.% Amin und 0,05 bis 2,5 Gew.% aromatischen Alkohol, wobei 0,1 bis 1,0 Gew.% Amin und 0,2 bis 1,5 Gew.% aromatischer Alkohol bevorzugt sind.

Bei Anwendung des erfindungsgemäßen Desinfektionsmittels tritt bereits bei Einwirkzeiten von 15 Minuten die gewünschte desinfizierende Wirkung ein. Bei Erhöhung der Einsatzkonzentration des Konzentrats in der Gebrauchslösung sind kürzere Einwirkzeiten möglich. Der pH-Wert von fertigen Gebrauchslösungen liegt im allgemeinen im Bereich von 7 bis 12, vorzugsweise 8 bis 11 und besonders bevorzugt 8,5 bis 10,5.

Das Desinfektionsmittelkonzentrat bzw. das Desinfektionsmittel enthält keine kationenaktive Verbindung ausgewählt aus Guanidinium- und quartären Ammoniumverbindungen. Aufgrund der Abwesenheit von solchen kationenaktiven Verbindungen besteht nicht die Gefahr, daß das Desinfektionsmittel an dem zu reinigenden Substrat in größerem Ausmaß haften bleibt oder darauf aufzieht und durch normale Spülvorgänge nicht ohne weiteres und vollständig entfernt wird.

Vorteilhafterweise kann die erfindungsgemäße Wirkstoffkombination mit anionischen und/oder nichtionischen Tensiden kombiniert werden, wobei anionische Tenside hinsichtlich der Reinigungswirkung und nichtionische Tenside oder eine Kombination aus anionischen und nichtionischen Tensiden hinsichtlich der bioziden Wirkung bevorzugt sind. Geeignete anionische Tenside umfassen Alkylsulfat, Alkylsulfonat, Alkylethersulfat, Alkylarylsulfonat, Alkylethercarbonsäure bzw. deren Alkali- oder Ammoniumsalz, wobei die Alkylgruppe 8 bis 18 Kohlenstoffatome enthält, oder eine Mischung von zwei oder mehreren dieser Verbindungen. Bevorzugt ist hierbei Alkylethercarbonsäure mit 2 bis 10, insbesondere 3 bis 5 Ethylenoxideinheiten.

Insbesondere durch Zusatz von Alkylethercarbonsäuren ergeben sich besonders stabile Desinfektionsmittel und Desinfektionsmittelkonzentrate, wobei die Desinfektionsmittellösungen hohe biozide Wirksamkeit und vorzügliche Reinigungsaktivität zeigen.

Das erfindungsgemäße Desinfektionsmittel bzw. -konzentrat ist eine klare Lösung mit sehr guter Stabilität, die auch nach längerer Lagerung keinen Niederschlag enthält, so daß keine Wirkstoffverluste durch Absetzen und Verwendung ohne vorheriges erneutes Auflösen auftreten.

Die erfindungsgemäßen Desinfektionsmittel bzw. -konzentrate weisen mit allen erdenklichen zu reinigenden Substraten eine gute Materialverträglichkeit auf.

Ferner ist bereits durch die grenzflächenaktive Aminkomponente Reinigungswirksamkeit gegeben, die durch den zusätzlich möglichen Gehalt an anionischem oder nichtionischem Tensid noch gesteigert werden kann. Darüber hinaus ist eine gute Abspülbarkeit von behandelten Materialien gegeben.

Die biozide Wirksamkeit beispielsweise gegenüber Aspergillus niger, Pseudomonas aeruginosa, Staphylococcus aureus, Proteus vulgaris oder Candida albicans, insbesondere aber die Wirksamkeit gegen Mykobakterien ist auch an Flächen und Instrumenten gegeben.

Insbesondere zeichnen sich das erfindungsgemäße Desinfektionsmittelkonzentrat bzw. das Desinfektionsmittel durch Emissionsarmut, d.h. Geruchsarmut, und einen vergleichsweise hohen Flammpunkt aus.

Gegenüber Konzentraten, die lediglich das sekundäre und/oder tertiäres Amin oder den aromatischen Alkohol enthalten, zeichnet sich das erfindungsgemäße Desinfektionsmittelkonzentrat durch bessere anwendungstechnische Eigenschaften wie z.B. eine niedrigere Viskosität und höhere Lagerstabilität aus.

Das Hauptanwendungsgebiet des Desinfektionsmittelkonzentrats bzw. Desinfektionsmittels ist die Bekämpfung von Bakterien, insbesondere Mykobakterien, Pilzen und Viren.

Die Erfindung wird im folgenden anhand von Beispielen näher erläutert.

### Beispiele 1 bis 9:

### Mikrobiologische Wirksamkeit gegen Mykobact. terrae im Instrumentenversuch

### Beispiele 1 bis 3

| | Formulierung |
|---|---|
| Beispiel 1: | 2 Teile Lonzabac 12 in VE-H20 |
| Beispiel 2: | 2 Teile Lonzabac 12 + 2 Teile Phenoxyethanol in VE-H20 |
| Beispiel 3: | 2 Teile Phenoxyethanol in VE-H20 |
| (VE = vollentsalztes Wasser) | |

| | Einsatzkonzentr. | Einwirkzeit | | | |
|---|---|---|---|---|---|
| | | 15 Min | 30 Min | 45 Min | 60 Min |
| Beispiel 1: | konz. | M | - | - | - |
| Beispiel 2: | konz. | - | - | - | - |
| Beispiel 3: | konz. | ++++ | + | 3 | - |

### Beispiele 4 bis 6

| | Formulierung |
|---|---|
| Beispiel 4: | 1,6 Teile Lonzabac 12 in VE-H20 |
| Beispiel 5: | 1,6 Teile Lonzabac 12 + 1,6 Teile Phenoxyethanol in VE-H20 |
| Beispiel 6: | 1,6 Teile Phenoxyethanol in VE-H20 |

| | Einsatzkonzentr. | Einwirkzeit | | | |
|---|---|---|---|---|---|
| | | 15 Min | 30 Min | 45 Min | 60 Min |
| Beispiel 4: | konz. | 1 | - | - | - |
| | 50% | + | - | - | - |
| Beispiel 5: | konz. | - | - | - | - |
| | 50% | E | - | - | - |
| Beispiel 6: | konz. | ++++ | ++++ | +++ | ++ |
| | 50% | ++++ | ++++ | ++++ | ++++ |

Ergebnis: Die Kombination aus Lonzabac 12 und Phenoxyethanol ist im Instrumentenversuch besser wirksam gegen Mykobakt. terrae als die Einzelkomponenten.

### Beispiele 7 bis 9

| | Formulierung |
|---|---|
| Beispiel 7: | 1,6 Teile Lonzabac 12 in VE-H20 |
| Beispiel 8: | 2 Teile Lonzabac 12 + 8 Teile Rewopal MPG 40 in VE-H20 |
| Beispiel 9: | 8 Teile Rewopal MPG 40 in VE-H20 |

| | | Einsatzkonzentr. | Einwirkzeit | | | |
|---|---|---|---|---|---|---|
| | | | 15 Min | 30 Min | 45 Min | 60 Min |
| | (% Lonzabac 12) | | | | | |
| Beispiel 7: | (1,6%) | konz. | 1 | - | - | - |
| | (0,8%) | 50% | + | - | - | - |
| | (0,4%) | 25% | ++ | - | - | - |
| Beispiel 8: | (2,0%) | konz. | - | - | - | - |
| | (1,0%) | 50% | - | - | - | - |
| | (0,5%) | 25% | E | - | - | - |
| | (0,25%) | 12,5% | + | E | - | - |
| Beispiel 9: | | konz. | Rasen | Rasen | Rasen | Rasen |
| | | 50% | Rasen | Rasen | Rasen | Rasen |
| | | 25% | Rasen | Rasen | Rasen | Rasen |

- Ergebnis:: Die Kombination aus Lonzabac 12 und Rewopal MPG 40 ist im Instrumentenvergleich besser wirksam gegen Mykobakt. terrae als die Einzelkomponenten.
- Legende:: - = kein Wachstum
Rasen > ++++ > +++ > ++ > + > M > E > Zahl (Das Wachstum nimmt in der genannten Rangfolge ab.)

Beispiele 1 bis 3 zeigen, daß bei 15 Minuten Einwirkzeit die Mischung (- = kein Wachstum) besser wirkt als die Einzelkomponenten (Lonzabac 12: M = mehrere koloniebildende Einheiten (KBE), Phenoxyethanol: starkes Wachstum).

Beispiele 4 bis 6 zeigen, daß bei einer 50%igen Lösung bei 15 Minuten Einwirkzeit ein deutlicher Effekt auftritt, während sich beim Konzentrat ein schwächerer Effekt zeigt. Es wird zusätzlich deutlich, daß Phenoxyethanol bei Einwirkzeiten von bis zu 60 Minuten weder in konzentrierter noch in verdünnter Form einen bemerkenswerten Wirkungsbeitrag leistet. Dies macht den Synergismus deutlich.

### Beispiele 10 bis 12

Auf dem Konzentrationsniveau der erfindungsgemäßen Desinfektionsmittelkonzentrate wurden die Wirkstoffe mit nichtionischen Tensiden und Isopropanol als Hilfsstoffen formuliert (Angaben in Gew.%).

| Beispiel | 10 | 11 | 12 |
|---|---|---|---|
| Lonzabac 12 | 10 | 10 | 10 |
| Phenoxypropanol | - | 20 | - |
| Phenoxyethanol | - | - | 20 |
| C₁₀-Oxoalkohol mit 11 EO (Lutensol ON 110) | 20 | 20 | 20 |
| Isopropanol | 10 | 10 | 10 |
| Wasser | 60 | 40 | 40 |

Wirksamkeit gegen Mykobakterien gem. DGHM-Richtlinien (Konz. und Einwirkzeit)

| | | | |
|---|---|---|---|
| 1 % | - | - | - |
| 2 % | - | 60 Min | 60 Min |
| 3 % | - | 45 Min | 45 Min |
| 5 % | 60 Min | 30 Min | 30 Min |

Hierbei wird besonders die Wirkungssteigerung deutlich, wenn dem Amin (Lonzabac 12) Phenoxyethanol oder Phenoxypropanol zugesetzt wird: Die Aminformulierung wirkt in 5%iger Konzentration innerhalb einer Stunde, die Kombination als 2%ige Lösung innerhalb einer Stunde bzw. als 5%ige Lösung innerhalb von 30 Minuten. Angesichts der Unwirksamkeit von Phenoxyethanol (siehe Beispiele 4 bis 6) ist von einem Synergismus auszugehen, der sich in der Senkung der Wirkstoffkonzentration oder der Einwirkzeitverkürzung ausnutzen läßt.

Die folgende Tabelle mit den Formulierungen zeigt bevorzugte Ausführungsformen des erfindungsgemäßen Desinfektionsmittels in Konzentratform, wobei Formulierung D besonders bevorzugt ist.

**Tabelle**

| Bestandteile | A | B | C | D |
|---|---|---|---|---|
| Phenoxyethanol | 30,0% | 30,0% | 30,0% | 30,0% |
| Lonzabac 12 | 12,0% | 12,0% | 12,0% | 12,0% |
| Isopropanol | 15,0% | 10,0% | 10,0% | 10,0% |
| Alkylethoxylat (11 EO) | 20,0% | - | - | - |
| Laureth-11-carboxylsäure* (Laurylethercarbonsäure mit 11 EO) | - | 15,0% | 18,0% | - |
| Lauryleth-5-carboxylsäure* (Laurylethercarbonsäure mit 5 EO) | - | - | - | 18,0% |
| Wasser | - ad 100% - | | | |
| Blutreinigung 15 min | viel Rückstand verblieben | etwas Rückstand verblieben | fast rückstandsfrei | fast rückstandsfrei |
| Lagerung bei -5°C, Aussehen | klar | klar | leicht trübe | klar |

| | | | | |
|---|---|---|---|---|
| * neutralisiert mit Natronlauge | | | | |

### Beispiele 13 bis 17

Mikrobiologische Wirksamkeit von erfindungsgemäßen Desinfektionsmittelkonzentraten gegen Mykobact. terrae im Keimträgerversuch gemäß DGHM-Richtlinien.

Jeweils 20 g verschiedener aromatischer Alkohole wurden zu einer Mischung aus 20 g Tridecanpolyethylenglykol(12)ether, 6 g Isodecanpolyethylenglykol(11)ether und 54 g gereinigtem Wasser (Gemisch A) oder aus 42 g Wasser und 12 g Genamin CCP 100 D (Gemisch B) gegeben. Die unterschiedlichen Einwirkzeiten im Keimträgerversuch zeigen den überraschenden wirkungssteigernden Einfluß des sekundären Amins. Angegeben sind die bei unterschiedlichen Anwendungskonzentrationen erforderlichen Einwirkzeiten (in Minuten), um keimfreie Keimträger zu erhalten.

| Einsatzkonzentration der obengenannten Gemische | | | | | | | | | | |
|---|---|---|---|---|---|---|---|---|---|---|
| Bsp./aromat. Alkohol | 0,5 % | | 1,0 % | | 2,0 % | | 3,0 % | | 5,0 % | |
| | A | B | A | B | A | B | A | B | A | B |
| 13) Phenoxyethanol | >120 | 60 | >120 | 30 | >120 | 15 | >120 | 15 | >120 | 15 |
| 14) Phenoxypropanole | >120 | 30 | >120 | 30 | >120 | 15 | >120 | 15 | >120 | 15 |
| 15) Phenylethanol | >120 | 60 | >120 | 30 | >120 | 15 | >120 | 15 | >120 | 15 |
| 16) 3-Phenylpropanol | >120 | 60 | >120 | 30 | >120 | 15 | 120 | 15 | 30 | 15 |
| Wird in der oben genannten Tensidmischung kein aromatischer Alkohol sondern nur Genamin CCP 100 D (12 g) eingesetzt, so ergeben sich die folgenden Einwirkzeiten: | | | | | | | | | | |
| 17) | 120 | | 60 | | 15 | | 15 | | 15 | |

Es wird deutlich, daß die erfindungsgemäße Mischung erheblich kürzere Einwirkzeiten erfordert als die aromatischen Alkohole (geringe Wirkung) oder das sekundäre Amin (erkennbare Wirkung).

## Patentansprüche

1. Desinfektionsmittelkonzentrat, das Amin und Alkohol umfaßt, dadurch gekennzeichnet, daß die Alkoholkomponente 5 bis 50 Gew.% mindestens eines aromatischen Alkohols ausgewählt aus einem Phenoxyalkanol, einem Phenylmonoglykolether eines Oligoglykols mit bis zu 4 Ethylenoxideinheiten oder einem Phenylalkanol umfaßt und die Aminkomponente 10 bis 50 Gew.%, aber nicht 10 Gew.%, mindestens eines sekundären und/oder tertiären, hydroxygruppenfreien Alkylamins der allgemeinen Formel 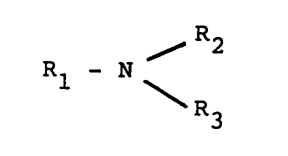 umfaßt, in der R₁ eine C₄-C₂₀-Alkyl, insbesondere C₆-C₁₈-Alkyl-, C₅-C₁₀-, insbesondere C₆-Cycloalkyl-, C₇-C₁₀-Arylalkyl-, insbesondere C₇-Arylalkyl- oder C₆-C₁₄-Arylgruppe, insbesondere C₆-Arylgruppe ist, R₂ eine Aminoalkylgruppe der Formel -(CH₂)ₙ-NH₂ ist, wobei n eine Zahl von 2 bis 10, bevorzugter eine Zahl von 2 bis 6, insbesondere 2 bis 3 ist, und R₃ Wasserstoff oder R₂ ist,
wobei das Desinfektionsmittelkonzentrat frei von kationenaktiven Verbindungen ausgewählt aus Guanidinium und quartären Ammoniumverbindungen ist.

2. Desinfektionsmittelkonzentrat nach Anspruch 1, dadurch gekennzeichnet, daß R₁ eine Dodecyl-, Cocosfettalkyl- oder eine Talgfettalkylgruppe ist.

3. Desinfektionsmittelkonzentrat nach Anspruch 1 oder 2, dadurch gekennzeichnet, daß das Amin N-(3-Aminopropyl)-N-dodecyl-1,3-propandiamin ist.

4. Desinfektionsmittelkonzentrat nach einem der Ansprüche 1 bis 3, dadurch gekennzeichnet, daß der aromatische Alkohol 2-Phenoxyethanol, 1-Phenoxy-2-propanol, 2-Phenoxy-1-propanol, 3-Phenoxy-1-propanol, 1-Phenoxy-2-butanol, 2-Phenoxy-1-butanol, 1-Phenylethanol, 2-Phenylethanol, 3-Phenyl-1-propanol, Benzylalkohol, α,4-Dimethylbenzylalkohol oder eine Mischung aus zwei oder mehr dieser Verbindungen und insbesondere 2-Phenoxyethanol, ein Gemisch aus 1-Phenoxy-2-propanol und 2-Phenoxy-1-propanol oder ein Gemisch aus 1-Phenoxy-2-butanol und 2-Phenoxy-1-butanol ist.

5. Desinfektionsmittelkonzentrat nach einem der Ansprüche 1 bis 4, dadurch gekennzeichnet, daß es außerdem üblich Zusatzstoffe wie Lösungsvermittler, Korrosionsschutzmittel, Komplexbildner, Entschäumer, Stabilisatoren, Puffer, Parfüm und/oder Farbstoffe umfaßt.

6. Desinfektionsmittelkonzentrat nach einem der Ansprüche 1 bis 5, dadurch gekennzeichnet, daß es anionisches Tensid enthält, das insbesondere Alkylsulfat, Alkylsulfonat, Alkylethersulfat, Alkylarylsulfonat, Alkylethercarbonsäure bzw. deren Alkali- oder Ammoniumsalz, wobei die Alkylgruppe 8 bis 18 Kohlenstoffatome enthält, oder eine Mischung von zwei oder mehr dieser Verbindungen und bevorzugt Alkylethercarbonsäure mit 2 bis 10, insbesondere 3 bis 5 Ethylenoxideinheiten umfaßt.

7. Desinfektionsmittelkonzentrat nach einem der Ansprüche 1 bis 6, dadurch gekennzeichnet, daß es nichtionische Tenside umfaßt.

8. Desinfektionsmittelkonzentrat nach einem der Ansprüche 1 bis 7, dadurch gekennzeichnet, daß es 10 bis 20 Gew.%, aber nicht 10 Gew.%, tert. Amin und 20 bis 30 Gew.% aromatischen Alkohol umfaßt.

9. Desinfektionsmittel, dadurch gekennzeichnet, daß es eine wäßrige Verdünnung des Desinfektionsmittelkonzentrats gemäß einem der Ansprüche 1 bis 8 ist.

10. Desinfektionsmittel nach Anspruch 9, dadurch gekennzeichnet, daß es 0,1 bis 10 Gew.%, insbesondere 0,5 bis 5 Gew.% des Desinfektionsmittelkonzentrats gemäß einem der Ansprüche 1 bis 8 enthält.

11. Desinfektionsmittel nach einem der Ansprüche 9 oder 10, dadurch gekennzeichnet, daß es 0,01 bis 5 Gew.%, aber nicht 0,01 Gew.%, tert. Amin und 0,005 bis 5 Gew.% aromatischen Alkohol, insbesondere 0,025 bis 2,5 Gew.% tert. Amin und 0,05 bis 2,5 Gew.% aromatischen Alkohol umfaßt.

12. Desinfektionsmittel nach einem der Ansprüche 9 bis 11, dadurch gekennzeichnet, daß es einen pH-Wert von 7 bis 12, insbesondere 8 bis 11 und bevorzugt 8,5 bis 10,5 aufweist.

13. Verwendung des Desinfektionsmittelkonzentrats gemäß einem der Ansprüche 1 bis 8 oder des Desinfektionsmittels gemäß einem der Ansprüche 9 bis 12 zur Herstellung eines Bakterizids, Mykobakterizids, Fungizids oder Viruzids.

## Claims

1. Disinfectant concentrate which comprises amine and alcohol, characterized in that the alcohol component comprises 5 to 50 % by weight of at least one aromatic alcohol selected from a phenoxyalkanol, a phenyl monoglycol ether of an oligoglycol having up to 4 ethylene oxide units or a phenylalkanol, and the amine component comprises 10 to 50 % by weight, but not 10 % by weight, of at least one secondary and/or tertiary, hydroxyl group-free alkylamine of the general formula 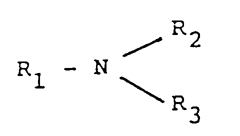 in which R₁ is a C₄-C₂₀-alkyl group, in particular a C₆-C₁₈-alkyl, a C₅-C₁₀, in particular a C₆-cycloalkyl, a C₇-C₁₀-arylalkyl, in particular a C₇-arylalkyl or a C₆-C₁₄-aryl group, in particular a C₆-aryl group, R₂ is an aminoalkyl group of the formula -(CH₂)ₙ-NH₂, in which n is a number from 2 to 10, more preferably a number from 2 to 6, in particular 2 to 3, and R₃ is hydrogen or R₂,
the disinfectant concentrate free from cationic compounds being selected from guanidinium and quaternary ammonium compounds.

2. Disinfectant concentrate according to Claim 1, characterized in that R₁ is a dodecyl, coconut oil alkyl or a stearin alkyl group.

3. Disinfectant concentrate according to Claim 1 or 2, characterized in that the amine is N-(3-aminopropyl)-N-dodecyl-1,3-propanediamine.

4. Disinfectant concentrate according to one of Claims 1 to 3, characterized in that the aromatic alcohol is 2-phenoxyethanol, 1-phenoxy-2-propanol, 2-phenoxy-1-propanol, 3-phenoxy-1-propanol, 1-phenoxy-2-butanol, 2-phenoxy-1-butanol, 1-phenylethanol, 2-phenylethanol, 3-phenyl-1-propanol, benzyl alcohol, α,4-dimethylbenzyl alcohol or a mixture of two or more of these compounds and in particular 2-phenoxyethanol, a mixture of 1-phenoxy-2-propanol and 2-phenoxy-1-propanol or a mixture of 1-phenoxy-2-butanol and 2-phenoxy-1-butanol.

5. Disinfectant concentrate according to one of Claims 1 to 4, characterized in that it also contains customary additives such as solubilizers, corrosion inhibitors, complexing agents, anti-foaming agents, stabilizers, buffers, perfume and/or dyestuffs.

6. Disinfectant concentrate according to one of Claims 1 to 5, characterized in that it includes anionic surfactant which contains in particular alkyl sulphate, alkyl sulphonate, alkyl ether sulphate, alkylaryl sulphonate, alkyl ether carbonic acid or the alkali or ammonium salt thereof, the alkyl group containing 8 to 18 carbon atoms, or comprises a mixture of two or more of these compounds and preferably alkyl ether carbonic acid having 2 to 10, in particular 3 to 5, ethylene oxide units.

7. Disinfectant concentrate according to one of Claims 1 to 6, characterized in that it contains non-ionic surfactants.

8. Disinfectant concentrate according to one of Claims 1 to 7, characterized in that it contains 10 to 20 % by weight, but not 10 % by weight, of tert. amine and 20 to 30 % by weight of aromatic alcohol.

9. Disinfectant, characterized in that it is an aqueous dilution of the disinfectant concentrate according to one of Claims 1 to 8.

10. Disinfectant according to Claim 9, characterized in that it contains 0.1 to 10 % by weight, in particular 0.5 to 5 % by weight, of the disinfectant concentrate according to one of Claims 1 to 8.

11. Disinfectant according to one of Claims 9 or 10, characterized in that it contains 0.01 to 5 % by weight, but not 0.01 % by weight, of tert. amine and 0.005 to 5 % by weight of aromatic alcohol, in particular 0.025 to 2.5 % by weight of tert. amine and 0.05 to 2.5 % by weight of aromatic alcohol.

12. Disinfectant according to one of Claims 9 to 11, characterized in that it has a pH value of 7 to 12, in particular 8 to 11 and preferably 8.5 to 10.5.

13. Use of the disinfectant concentrate according to one of Claims 1 to 8 or of the disinfectant according to one of Claims 9 to 12 for the preparation of a bactericide, mycobactericide, fungicide or virucide.

## Revendications

1. Concentré désinfectant, contenant amine et alcool caractérisé en ce que le composant alcool contient de 5 à 50% en poids au moins d'un alcool aromatique choisi dans le groupe comprenant un phénoxyalcanol, un phénylmonoglycoléther d'un oligoglycol renfermant jusqu'à 4 motifs oxyde d'éthylène ou un phénylalcanol et le composant amine contient de 10 à 50% en poids, mais non 10% en poids, d'au moins une alkylamine secondaire et/ou tertiaire, exempte de groupes hydroxy, répondant à la formule générale : 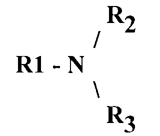 dans laquelle R₁ est un groupe alkyle en C₄ à C₂₀, notamment alkyle en C₆ à C₁₈, cycloalkyle en C₅ à C₁₀, notamment en C₆, arylalkyle en C₇ à C₁₀, notamment arylalkyle en C₇ ou aryle en C₆, à C₁₄, notamment aryle en C₆, R₂ est un groupe aminoalkyle de formule -(CH₂)ₙ-NH₂, n étant un entier de 2 à 10, de préférence de 2 à 6, notamment de 2 à 3, et R₃ étant un atome d'hydrogène ou étant identique à R₂, ledit concentré désinfectant étant exempt de composés cationiques actifs du groupe des composés de guanidinium et des composés d'ammonium quaternaire.

2. Concentré désinfectant selon la revendication 1, caractérisé en ce que R1 est un groupe dodécyle, alkyle d'huile de noix de coco, ou alkylsuif.

3. Concentré désinfectant selon la revendication 1 ou 2, caractérisé en ce que l'amine est la N-(3-aminopropyl)-N-dodécyl-1,3-propanediamine.

4. Concentré désinfectant selon l'une quelconque des revendications 1 à 3, caractérisé en ce que l'alcool aromatique est le 2-phénoxyéthanol, 1-phénoxy-2-propanol, 2-phénoxy-1 propanol, 3-phénoxy-1-propanol, 1-phénoxy-2-butanol, 2-phénoxy-1-butanol, 1-phényléthanol, 2-phényléthanol, 3-phényl-1-propanol, l'alcool benzylique, l'alcool a,4-diméthylbenzylique ou un mélange de deux ou de plus de deux de ces dérivés et notamment du 2-phénoxyéthanol, un mélange de 1-phénoxy-2-propanol et de 2-phénoxy-1-propanol ou un mélange de 1-phénoxy-2-butanol et 2-phénoxy-1-butanol.

5. Concentré désinfectant selon l'une quelconque des revendications 1 à 4, caractérisé en ce qu'il comprend en outre des additifs usuels tels que des adjuvants de dissolution, des agents anticorrosions, des agents complexants, des agents antimousses, des stabilisants, des tampons, des parfums et/ou des colorants.

6. Concentré désinfectant selon l'une quelconque des revendications 1 à 5, caractérisé en ce qu'il contient un agent tensioactif anionique, notamment un alkylsulfate, alkylsulfonate, alkyléthersulfate, alkylarylsulfonate, acide alkyléthercarboxylique, notamment leurs sels alcalins ou sel d'ammonium, dans lesquels le groupe alkyle renferme de 8 à 12 atomes de carbone; ou un mélange de deux ou de plus de deux de ces dérivés et de préférence un acide alkyléthercarboxylique renfermant de 2 à 10, de préférence, de 3 à 5 motifs oxyde d'éthylène.

7. Concentré désinfectant selon l'une quelconque des revendications 1 à 6, caractérisé en ce qu'il contient des agents tensioactifs non-ioniques

8. Concentré désinfectant selon l'une quelconque des revendications 1 à 7,caractérisé en ce qu'il comprend de 10 à 20% en poids, mais non 10% en poids, d'amine tertiaire et de 20 à 30% en poids d'alcool aromatique

9. Agent désinfectant caractérisé en ce qu'il consiste en une dilution aqueuse du concentré désinfectant selon l'une quelconque des revendications 1 à 8.

10. Agent désinfectant selon la revendication 9, caractérisé en ce qu'il contient de 0,1 à 10% en poids, notamment 0,5 à 5% en poids du concentré désinfectant selon l'une quelconque des revendications 1 à 8.

11. Agent désinfectant selon l'une quelconque des revendications 9 ou 10, caractérisé en ce qu'il comprend de 0,01 à 5% en poids, mais non 0,01% en poids d'amine tertiaire et de 0,005 à 5% en poids d'alcool aromatique, notamment de 0,025 à 2,5% en poids d'amine tertiaire et de 0,05 à 2,5% en poids d'alcool aromatique.

12. Agent désinfectant selon l'une quelconque des revendications 9 à 11, caractérisé en ce que la valeur de son pH est comprise entre 7 et 12, notamment 8 et 11 et de préférence 8,5 et 10,5.

13. Utilisation du concentré désinfectant selon l'une quelconque des revendications 1 à 8 ou de l'agent désinfectant selon l'une quelconque des revendications 9 à 12 pour la fabrication d'un bactéricide, d'un mycobactéricide, d'un fongicide ou d'un agent antiviral.
